# EUROPÄISCHE PATENTANMELDUNG

(11) **EP 2 636 783 A1**
(43) Veröffentlichungstag der Anmeldung: **11.09.2013**
(21) Anmeldenummer: 12158958.4
(22) Anmeldetag: 09.03.2012
(51) Int. Cl.: D04H 3/04, D04H 5/03, D04H 3/105, B29C 70/20

(54) **Flächiger Verbundwerkstoff**

(71) Anmelder: Quadrant Plastic Composites AG, 5600 Lenzburg (CH)
(72) Erfinder: Die Erfindernennung liegt noch nicht vor
(74) Vertreter: Schmauder & Partner AG Patent- & Markenanwälte VSP

(57) **Zusammenfassung**

Die Erfindung betrifft einen flächigen Verbundwerkstoff, umfassend eine UD-Faser-Schicht A aus diskreten Verstärkungsfaser-Rovings und eine FaservliesSchicht B aus einem Thermoplastvlies, das Verstärkungsfasern enthalten kann, wobei die Schichten A und B miteinander vernadelt sind.

## Beschreibung

Die Erfindung betrifft einen flächigen Verbundwerkstoff mit mindestens einer Schicht A aus unidirektionalen Verstärkungsfaser-Rovings und mindestens einer Schicht B aus einem Thermoplastfaser-Vlies oder einem Thermoplastfaser-Gelege, die gegebenenfalls Verstärkungsfasern enthalten können, wobei die Schichten A und B miteinander vernadelt sind.

Thermoplastische Kunststoffe werden wegen ihres geringen Gewichts in zunehmendem Masse zur Herstellung von Bauteilen, insbesondere für Kraftfahrzeugteile verwendet. Um ihnen eine ausreichende Steifigkeit und Festigkeit zu verleihen, werden sie gewöhnlich mit Verstärkungsfasern verbunden. So werden z.B. flächige Halbzeuge aus glasmattenverstärkten Thermoplasten (GMT-Halbzeuge) hergestellt durch Zusammenführen von Endlos-Glasfasermatten und Thermoplast-Schmelzebahnen und Konsolidieren auf einer Doppelbandpresse. Diese Arbeitsweise erfordert jedoch einen hohen Energieaufwand, da die vergleichsweise zähflüssige Schmelze bei Drücken weit oberhalb von 1 bar in die Matte eingepresst werden muss. Ausserdem ist die Verstärkung ungerichtet, während im Kraftfahrzeugbereich gerade eine Verstärkung in einer oder mehreren Vorzugsrichtungen erwünscht ist.

Dies ist bei dem Verbundwerkstoff nach WO 2006/111037 der Fall. Dort ist ein thermoplastisch verarbeitbarer Verbundwerkstoff beschrieben, umfassend eine Faservliesschicht aus Thermoplastfasern und gegebenenfalls Verstärkungsfasern und eine Gewebe- oder Gelegeschicht aus Verstärkungsfasern, die vorzugsweise miteinander vernadelt sind. Gelege sind vorgefertigte Fasergebilde, bei denen mehrere Lagen unidirektionaler Faser-Rovings durch Nähfäden dicht und fest miteinander verwirkt sind. Die Herstellung derartiger Fasergebilde ist recht aufwendig, ausserdem werden bei der Vernadelung der Schichten wegen der festen Bindung der Rovings durch die Nähfäden diese Rovings nicht ausreichend weit geöffnet, so dass sie nur unzureichend und ungleichmässig mit dem Thermoplasten imprägniert werden, wodurch die mechanischen Eigenschaften daraus hergestellter Formkörper negativ beeinflusst werden.

Der Erfindung lag somit die Aufgabe zu Grunde, Verbundwerkstoffe auf Basis von unidirektionalen Faser-Rovings bereitzustellen, die diese Nachteile nicht aufweisen.

Es wurde nun gefunden, dass diese Aufgabe gelöst wird, wenn man statt eines Fasergeleges direkt diskrete, nicht miteinander verbundene Verstärkungsfaser-Rovings (sog. "unidirektionale Fasern", im Folgenden als "UD-Fasern" bezeichnet) verwendet und diese mit einer Wirrfaser-Schicht zusammennadelt.

Gegenstand der Erfindung ist demzufolge ein flächiger Verbundwerkstoff, umfassend
- A.: mindestens eine UD-Faser-Schicht mit einem Flächengewicht von 100 bis 2'000 g/m² aus diskreten, nicht miteinander verbundenen, unidirektionalen Verstärkungsfaser-Rovings und
- B.: mindestens eine Wirrfaser-Schicht mit einem Flächengewicht von 100 bis 2'000 g/m² aus einem Thermoplastfaser-Vlies oder einem Thermoplastfaser-Gelege, die bis zu 80 Gew.-% Verstärkungsfasern enthalten können, wobei die Schichten A und B miteinander vernadelt sind.

Die erfindungsgemässen Verbundwerkstoffe weisen bevorzugt die Schichtenfolge A - B auf, grundsätzlich sind aber auch andere Schichtenfolgen, beispielsweise A - B - A oder A - B - A - B möglich.

Bei einer ersten, bevorzugten Ausgestaltung der Erfindung besteht die Wirrfaser-Schicht B aus einem Faservlies, z.B. einem Nadelvlies oder einem ungenadelten Krempel- oder Airlay-Vlies mit Flächengewichten von 100 bis 2'000 g/m², vorzugsweise von 200 bis 1'200 g/m² und insbesondere von 300 bis 1'000 g/m². Das Faservlies besteht vorzugsweise zu 100% aus Thermoplastfasern, es kann aber auch bis zu 80 Gew.-%, insbesondere 30 bis 70 Gew.-% Verstärkungsfasern enthalten. Sowohl die Thermoplastfasern als auch die Verstärkungsfasern weisen vorzugsweise eine Länge von 20 bis 100 mm auf.

Als Thermoplastfasern kommen alle verspinnbaren thermoplastischen Kunststoffe in Frage, vorzugsweise Polypropylen mit einem MFI (230°C, 2.16 kp) von 25 bis 150 g/10 min, insbesondere ein unmodifiziertes, d.h. Carboxylgruppen-freies Polypropylen, sowie Polyamide, wie Polyamid-6 und Polyamid-6,6, daneben aber auch lineare Polyester, Polysulfone, Polyketone und Polyetherimide. Bevorzugte Verstärkungsfasern sind Glasfasern und Kohlenstofffasern, daneben sind auch Naturfasern, Aramidfasern und Basaltfasern geeignet.

Zusätzlich kann der Verbundwerkstoff eine verhältnismässig dünne Faser-Schicht C aus ungerichteten Verstärkungsfasern mit einem Flächengewicht von 50 bis 500 g/m², vorzugsweise von 100 bis 300 g/m² auf der von der Schicht A abgewandten Seite der Schicht B enthalten, so dass sich eine Schichtenfolgen A - B - C ergibt. Diese Schicht C bewirkt eine zusätzliche Verstärkung des Verbundwerkstoffs, was dann wichtig wird, wenn ein Faservlies mit verhältnismässig geringem Flächengewicht eingesetzt wird. Als ungerichtete Fasern kommen insbesondere Glasfasern oder Kohlenstofffasern in Frage.

Bei einer zweiten Ausgestaltung besteht die Wirrfaser-Schicht B aus einem Fasergelege mit endlosen Thermoplastfasern, das gegebenenfalls auch endlose Verstärkungsfasern enthalten kann. Bevorzugte Thermoplastfasern sind

Polypropylenfasern mit einem Titer von 600 bis 2'400 dtex, die mit üblichen Stabilisatoren und Haftvermittlern ausgerüstet sein können.

Bevorzugt ist, dass der Verbundwerkstoff ausschliesslich Schichten A und B, sowie gegebenenfalls C, jedoch keine weiteren andersartigen Schichten enthält.

Der erfindungsgemässe Verbundwerkstoff enthält vorzugsweise 30 bis 80 Gew.- %, insbesondere 50 bis 70 Gew.-% UD-Fasern. Sein Flächengewicht beträgt vorzugsweise 200 bis 4'000 g/m², insbesondere 1'000 bis 2'000 g/m². Im nichtkonsolidierten Zustand ist er vorzugsweise 5 bis 15 mm dick.

Die Verstärkungsfaser-Rovings sind beispielsweise Glas-, Kohlenstoff-, Aramid- oder Basaltfasern mit einem Titer von vorzugsweise 100 bis 4'800 tex, insbesondere 200 bis 3'000 tex. Besonders bevorzugt sind Kohlenstofffasern. Verbundwerkstoffe auf dieser Basis weisen eine besonders hohe Steifigkeit in Längsrichtung und eine sehr gute Flexibilität auf.

Besonders bevorzugte Verbundwerkstoffe enthalten als UD-Fasern Kohlenstofffasern, und die Faservlies-Schicht enthält als thermoplastischen Kunststoff ein Polyamid, insbesondere Polyamid-6, sowie 30 bis 70 Gew.-% Kohlenstofffasern. Dabei können mit Vorteil recyclierte Kohlenstofffasern eingesetzt werden, die z.B. aus zerkleinerten, mit Kohlenstofffasern verstärkten Fertigteilen durch bekannte Recyclierverfahren erhalten wurden. Derartige Verbundwerkstoffe sind gut temperaurbeständig.

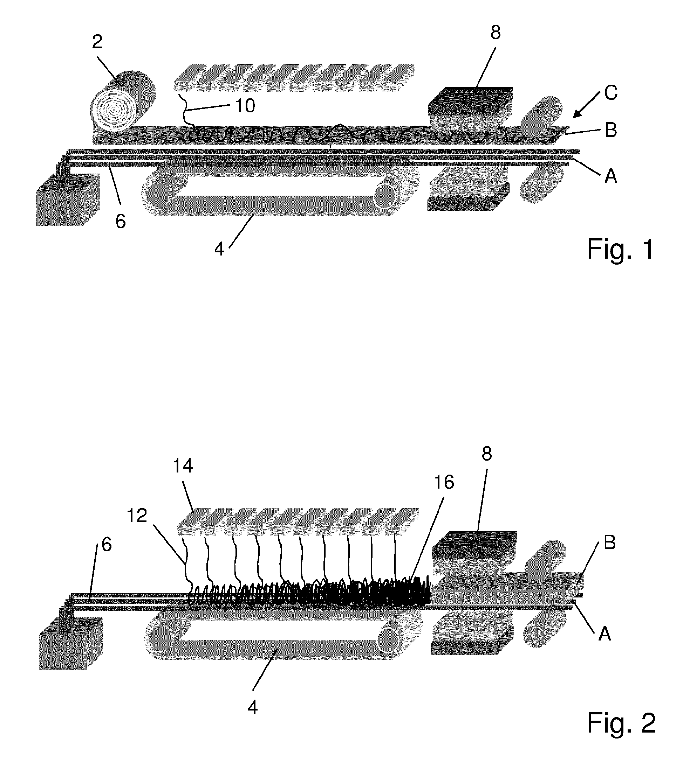

Eine Ausführungsform des Verfahrens zur Herstellung von Verbundwerkstoffen gemäss der ersten Ausgestaltung ist in der Figur 1 als perspektivische Darstellung gezeigt. Zunächst eine Faservlies-Schicht nach dem Krempel- oder Airlay-Verfahren hergestellt und zu einem Nadelvlies 2 vernadelt. Auf einem umlaufenden Endlos-Band 4 werden erst die UD-Fasern 6 nebeneinander abgelegt, vorzugsweise möglichst bündig unter Bildung einer Schicht A. Darauf wird dann kontinuierlich das vorgefertigte Nadelvlies 2 unter Bildung einer Schicht B abgelegt, und die beiden Schichten A, B werden anschliessend in einer Nadelvorrichtung 8 miteinander vernadelt.

Es ist auch möglich, ohne Nadelung ein nach dem Airlay- oder Krempel-Verfahren hergestelltes Vlies direkt auf den UD-Fasern abzulegen und dann erst zu nadeln.

Wenn der Verbundwerkstoff weitere Schichten A bzw. B enthalten soll, können die entsprechenden Bahnen zusätzlich zugeführt und mitvernadelt werden.

Falls der Verbundwerkstoff zusätzlich eine dünne Schicht C enthalten soll, werden auf das Faservlies der oberen Schicht B die Wirrfasern 10 der Schicht C als Endlosmatte abgelegt oder als Schnittfasern aufgestreut. Alle drei Schichten werden dann miteinander vernadelt. In der beigefügten Figur 1 ist dies schematisch dargestellt.

Figur 2 zeigt perspektivisch eine weitere Ausführungsform des Verfahrens zur Herstellung von Verbundwerkstoffen gemäss der zweiten Ausgestaltung. Auf einem umlaufenden Endlos-Band 4 zunächst die UD-Fasern 6 der Schicht A abgelegt, darauf werden dann Thermoplastfasern 12 sowie gegebenenfalls Verstärkungsfasern aus traversierenden Feedern 14 unter Bildung eines Geleges 16 entsprechend der Schicht B abgelegt, und die Schichten A, B werden anschliessend in einer Nadelvorrichtung 8 miteinander vernadelt. Dies ist in der Figur 2 schematisch dargestellt.

Die erfindungsgemässen Verbundwerkstoffe können zu dünnen Platten geschnitten werden. Diese Zuschnitte können dann direkt zu dreidimensionalen Bauteilen verarbeitet werden, indem man sie in einer Form bei Temperaturen oberhalb des Erweichungspunktes des Thermoplasten verpresst. Man kann aber auch ein Halbzeug herstellen, indem die flächige Verbundwerkstoff-Bahn z. B. auf einer Doppelbandpresse bei Temperaturen oberhalb des Erweichungspunktes des Thermoplasten und bei Drücken von 0.5 bis 5 bar kontinuierlich konsolidiert wird. Auch ein Verpressen auf Kaschiereinrichtungen ist möglich. Das konsolidierte Halbzeug hat eine Dicke von vorzugsweise 0.3 bis 5.0 mm, insbesondere von 1.0 bis 3.0 mm. Es ist auch möglich, Zuschnitte aus den Verbundwerkstoffen zur gezielten Verstärkung von Faserverbund-Formteilen zu verwenden, indem man sie zusammen mit z.B. GMT- oder NMT-Halbzeugen (d.h. Halbzeugen auf Basis von glasmatten-verstärkten bzw. naturfasermatten-verstärkten Thermoplasten) in eine Form einlegt und zusammen mit diesen verpresst.

Die aus den erfindungsgemässen Verbundwerkstoffen hergestellten Fertigteile sind besonders leicht und hochsteif. Sie können als Kraftfahrzeugteile, für Sportartikel, im Eisenbahnwaggonbau und im Flugzeugbau verwendet werden.

## Patentansprüche

1. Flächiger Verbundwerkstoff, umfassend
a) mindestens eine UD-Faser-Schicht A mit einem Flächengewicht von 100 bis 2'000 g/m² aus diskreten, nicht miteinander verbundenen unidirektionalen Verstärkungsfaser-Rovings (6), und
b) mindestens eine Wirrfaser-Schicht B mit einem Flächengewicht von 100 bis 2000 g/m² aus einem Thermoplastfaser-Vlies (2) oder einem Thermoplastfaser-Gelege (16), die jeweils bis zu 80 Gew.-% Verstärkungsfasern enthalten können, wobei die Schichten A und B miteinander vernadelt sind.

2. Verbundwerkstoff nach Anspruch 1, **dadurch gekennzeichnet, dass** er die Schichtenfolge A - B aufweist.

3. Verbundwerkstoff nach Anspruch 1, **dadurch gekennzeichnet, dass** das Faservlies der Schicht B ein Nadelvlies oder ein ungenadeltes Krempel- oder Airlay-Vlies ist, welches aus Thermoplastfasern gebildet ist und gegebenenfalls 30 bis 70 Gew.-% Verstärkungsfasern enthält.

4. Verbundwerkstoff nach Anspruch 3, **dadurch gekennzeichnet, dass** er zusätzlich eine Faser-Schicht C aus ungerichteten Verstärkungsfasern mit einem Flächengewicht von 50 bis 500 g/m² auf der von der Schicht A abgewandten Seite der Schicht B enthält.

5. Verbundwerkstoff nach Anspruch 1, **dadurch gekennzeichnet, dass** das Fasergelege der Schicht B aus endlosen Thermoplastfasern gebildet ist und gegebenenfalls endlose Verstärkungsfasern enthält.

6. Verbundwerkstoff nach Anspruch 1 oder 4, **dadurch gekennzeichnet, dass** er 30 bis 80 Gew.-% UD-Fasern enthält.

7. Verbundwerkstoff nach Anspruch 1 oder 4, **dadurch gekennzeichnet, dass** die Verstärkungsfaser-Rovings der Schicht A Glas-, Kohlenstoff-, Aramid- oder Basalt-Fasern mit einem Titer von 200 bis 4'800 tex sind.

8. Verbundwerkstoff nach Anspruch 1 oder 4, **dadurch gekennzeichnet, dass** der thermoplastische Kunststoff der Schicht B unmodifiziertes Polypropylen oder Polyamid-6 oder Polyamid-6,6 ist.

9. Verbundwerkstoff nach Anspruch 3, **dadurch gekennzeichnet, dass** die UD-Fasern der Schicht A Kohlenstofffasern sind und die Faservlies-Schicht B 30 bis 70 Gew.-% recyclierte Kohlenstofffasern und 70 bis 30 Gew.-% eines Polyamids enthält.

10. Kontinuierliches Verfahren zur Herstellung des Verbundwerkstoffs nach Anspruch 3, **dadurch gekennzeichnet, dass** man auf einem umlaufenden Endlos-Band (4) zunächst nebeneinander die UD-Fasern der Schicht A und darauf das Faservlies der Schicht B ablegt, und dass man anschliessend die Schichten A und B miteinander vernadelt.

11. Kontinuierliches Verfahren zur Herstellung des Verbundwerkstoffs nach Anspruch 4, **dadurch gekennzeichnet, dass** man auf einem umlaufenden Endlos-Band (4) zunächst die UD-Fasern der Schicht A, dann das Faservlies der Schicht B und darauf die ungerichteten Fasern der Schicht C ablegt, und dass man anschliessend die Schichten A, B und C miteinander vernadelt.

12. Kontinuierliches Verfahren zur Herstellung des Verbundwerkstoffs nach Anspruch 5, **dadurch gekennzeichnet, dass** man auf einem umlaufenden Endlos-Band (4) zunächst die UD-Fasern der Schicht A und darauf aus traversierenden Feedern die Endlosfasern der Schicht B ablegt und anschliessend die Schichten A und B miteinander vernadelt.

13. Verwendung des Verbundwerkstoffs nach Anspruch 1 oder 3 zur Herstellung von Bauteilen durch Verpressen eines Zuschnitts aus dem Verbundwerkstoff in einer Form bei Temperaturen oberhalb des Erweichungspunktes des Thermoplasten.

14. Verwendung des Verbundwerkstoffs nach Anspruch 1 oder 3 zur Herstellung eines thermoplastisch umformbaren flächigen Halbzeugs durch Verpressen in einer Doppelbandpresse bei Temperaturen oberhalb des Erweichungspunktes des Thermoplasten.

15. Verwendung des Verbundwerkstoffs nach Anspruch 1 oder 3 zur Herstellung von Bauteilen durch Verpressen eines Zuschnitts aus dem Verbundwerkstoff zusammen mit einem GMT- oder NMT-Halbzeug in einer Form bei Temperaturen oberhalb des Erweichungspunktes des Thermoplasten.
